# EUROPEAN PATENT APPLICATION

(11) **EP 2 216 561 A1**
(43) Date of publication of application: **11.08.2010**
(21) Application number: 08843500.3
(22) Date of filing: 29.10.2008
(51) Int. Cl.: F16D 27/112

(54) **ELECTROMAGNETIC CLUTCH**

(30) Priority: 30.10.2007 JP 2007282000
(71) Applicant: Sanden Corporation, Isesaki-shi, Gunma 372-8502 (JP)
(72) Inventor: SHIRAI, Isamu, Isesaki-shi Gunma 372-8502 (JP); ARASAWA, Takeshi, Isesaki-shi Gunma 372-8502 (JP); SHIMOYAMA, Takao, Isesaki-shi Gunma 372-8502 (JP); FUJIU, Hideaki, Isesaki-shi Gunma 372-8502 (JP)
(74) Representative: Prüfer & Partner GbR European Patent Attorneys
(86) International application number: PCT/JP2008/069614
(87) International publication number: WO 2009/057621

(57) **Abstract**

Provided is an electromagnetic clutch, in which a plurality of magnetic flux shielding slits extending in the axial direction and arcuately in the circumferential direction are formed individually in a rotor and an armature, and in which the magnetic flux by the excitation of a coil inserted on the anti-armature side of the rotor is passed from the non-slit portion of the rotor to the non-slit portion of the armature and from the non-slit portion of the armature to the non-slit portion of the rotor, so that a magnetic attraction is generated to bring two frictional faces into press contact with each other and so that the two frictional faces are separated by the demagnetization of the coil. The slits of at least one of the rotor and the armature are formed to change in such a taper shape that the slit width at the frictional face side may be smaller than that at the anti-frictional face side. Without inviting any drastic cost increase, the mutual press-contact force of the frictional faces can be enhanced so that a higher torque transmission may be possible with the same size as that of the conventional structure.

## Description

### Technical Field of the Invention

The present invention relates to an electromagnetic clutch, and specifically to an electromagnetic clutch with a rotor and an armature, which has frictional faces and which is provided with slits for shielding magnetic flux.

### Background Art of the Invention

Known is an electromagnetic clutch in which a plurality of magnetic flux shielding slits penetrating in an axial direction and extending arcuately in a circumferential direction are formed individually in a rotor and an armature whose frictional faces are disposed face to face in the axial direction at a condition capable of being brought into contact with and separated from each other, and a magnetic flux generated by excitation of a coil inserted on an anti-armature side of the rotor is passed from a non-slit portion of the rotor to a non-slit portion of the armature and from the non-slit portion of the armature to another non-slit portion of the rotor, so that a magnetic attraction force is generated to bring both frictional faces into press contact with each other and so that the both frictional faces are separated by demagnetization of the coil, as disclosed in patent document 1. Such a clutch is, for example, provided in a rotational drive force input section of a compressor for compressing refrigerant in a refrigeration cycle of an air conditioning system for vehicles, so as to control ON/OFF of a the drive force transmission from a drive source such as an engine.

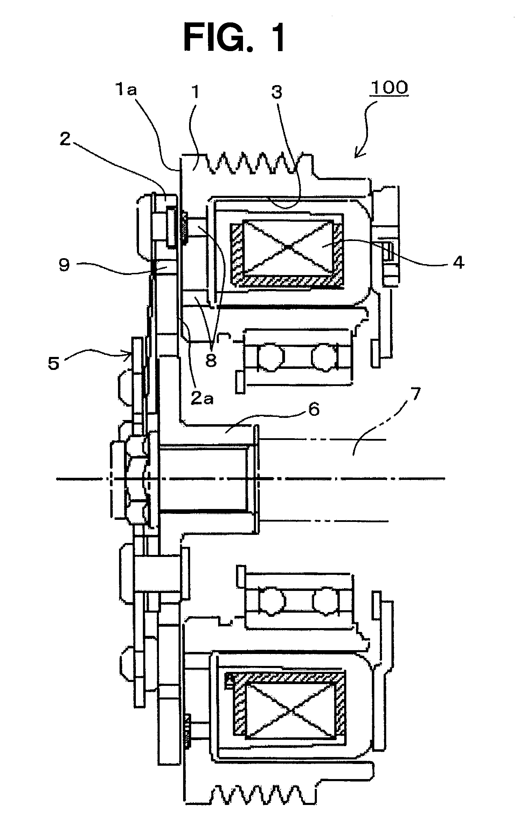

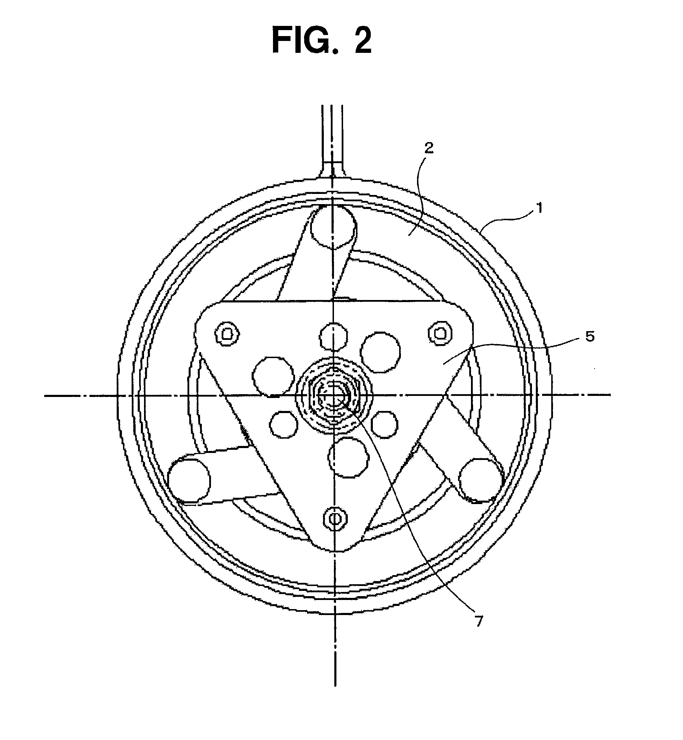

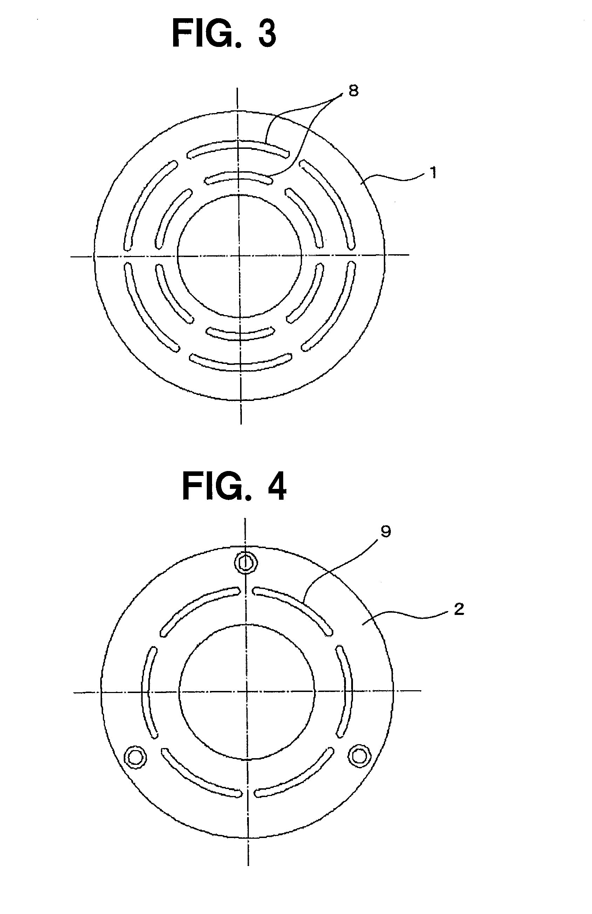

Fig. 1 and Fig. 2 show an example of electromagnetic clutch 100 installed to the above-described compressor. Besides, a whole basic composition of this electromagnetic clutch is the same as that of the present invention to be described. Frictional face 1a of rotor 1 having a pulley composition to which the drive force from the drive source side is transmitted and frictional face 2a of armature 2 which is disposed face to face with rotor 1 are brought into press contact with and separated from each other, by excitation and demagnetization of coil 4 inserted into annular space 3 of rotor 1. In the depicted example, the rotational drive force transmitted by press-contact between both frictional faces, is transmitted through torque limiter mechanism 5 from central boss section 6 to rotational axis 7 of the compressor. As shown in Fig. 3, rotor 1 is provided with a plurality of magnetic flux shielding slits 8, which penetrate straightly in an axial direction and extend arcuately in a circumferential direction. As shown in Fig. 4, armature 2 is provided with a plurality of magnetic flux shielding slits 9, which penetrate straightly in an axial direction and extend arcuately in a circumferential direction. When coil 4 is excited, the magnetic flux is passed from a non-slit portion, which means a part without a slit, of rotor 1 to a non-slit portion of armature 2 and from the non-slit portion of armature 2 to another non-slit portion of rotor 1, and further in the shown example the magnetic flux is passed from the non-slit portion of rotor 1 to another non-slit portion of armature 2 and from the non-slit portion of armature 2 to another non-slit portion of rotor 1, so that both frictional faces are brought into press contact with each other.

In such a composition, when the greater magnetic flux passes through the route between the above-described frictional faces, the greater press-contact force between the frictional faces is generated, so that the greater torque can be transmitted. However, in a conventional structure as described above, because slits 8,9 provided in rotor 1 or armature 2 are machined by punching press and it is difficult for the frictional face of the non-slit portion to form with a large area, the magnetic flux cannot pass smoothly therethrough and it is difficult for the transmission torque to be set great. Further, in a method where the slit width is merely reduced and the area of the non-slit portion in the frictional face is increased, a magnetic flux leak through the slit increases and the transmission torque cannot be increased. Furthermore, in a method where a special friction liner is provided in the frictional face, the cost of the whole electromagnetic clutch is much increased.
Patent document 1: JP-9-32869-A

### Disclosure of the Invention

### Problems to be solved by the Invention

Accordingly, an object of the present invention is to provide a structure of an electromagnetic clutch which can transmit more torque with the same size by increasing the press-contact force between frictional faces without great cost increase. In other words, it is to provide an electromagnetic clutch structure, where the power consumption can be saved for the electromagnetic coil and the whole electromagnetic clutch can be reduced in size and weight, if required transmission torque is the same.

### Means for solving the Problems

To achieve the above-described object, an electromagnetic clutch according to the present invention is an electromagnetic clutch, in which a plurality of magnetic flux shielding slits penetrating in an axial direction and extending arcuately in a circumferential direction are formed individually in a rotor and an armature whose frictional faces are disposed face to face in the axial direction at a condition capable of being brought into contact with and separated from each other, and a magnetic flux generated by excitation of a coil inserted on an anti-armature side of the rotor is passed from a non-slit portion of the rotor to a non-slit portion of the armature and from the non-slit portion of the armature to another non-slit portion of the rotor, so that a magnetic attraction force is generated to bring both frictional faces into press contact with each other and so that both frictional faces are separated by demagnetization of the coil, **characterized in that** the slits of at least one of the rotor and the armature are formed in such a taper shape that a slit width at a frictional face side of each of the slits is smaller than that at an anti-frictional face side.

By forming the slits as changing their slit width, the slit width at the frictional face side can be reduced as an average slit width is kept conventional. By keeping the average slit width conventional, the increase of the magnetic flux leakage through the slit can be prevented, and the magnetic flux which flows between the non-slit portions of both frictional faces which are brought into press contact with each other can be increased by reducing the slit width at the frictional face side. Therefore the press-contact force between the frictional faces by the magnetic flux flowing between the non-slit portions can be increased. In addition, because the electric power for the coil to generate the same press-contact force can be saved, and because a non-slit portion with the same area can be formed even if the size of the rotor or the armature is small, the whole electromagnetic clutch can be reduced in size and weight.

In the electromagnetic clutch of the above-described present invention, the slits in taper shapes changing in slit width can be formed by using any one of a laser, an electron beam, a plasma and a water jet, other than a conventional punching press. By cutting as moving the laser, electron beam, plasma and the water jet in three dimensional directions, a slit can be easily formed in a desirable taper shape changing in slit width. In addition, because burrs are not generated in the process using any one of the laser, electron beam, plasma and the water jet, the process can be performed from both directions of anti-frictional face side and frictional direction side, so that no post-process such as burring is required. Specifically in a cut process using the water jet, because high pressured water containing abrasives is jetted to the metal, no oxidation and no thermal deformation are caused. Therefore, the quality becomes stable, because the spatter elimination after cutting is not required and there is no thermal deformation. Further, in a conventional process of punch press, there exists substantively a lower limit for a practical punch width, which means a punch width that can keep the durability over a certain number of processes in mass production, for the punch press, so that the slit width cannot be actually reduced very much. However, in a cutting using the laser, electron beam, plasma, or the water jet, there is not such a lower limit, and therefore the slit width can be set arbitrarily as desired.

Furthermore, in the electromagnetic clutch according to the present invention, it is possible that at least one of the slits changing in slit width is inclined relative to the axial direction. Namely in this case, the slits are inclined toward the direction in which an area of the non-slit portion where the magnetic flux passes becomes larger. Therefore the magnetic flux can be made greater more efficiently. Such a slit inclined structure can be realized relatively easily by cutting as moving the laser or electron beam in three dimensional directions, as maintaining a predetermined inclination angle therebetween.

In a case where such inclined slits are provided on the rotor side, it is preferable that the rotor has a slit changing in slit width and inclined so as to be located at a larger diameter position as viewed along an axial direction from the anti-frictional face side toward the frictional face side, and that an opening of the slit at the rotor frictional face side has a diameter portion larger than an outer diameter of an annular space of the rotor which forms a coil insertion portion. In this structure, because the slit opening at the rotor frictional face side is located on relatively outer side in the radial direction, the area of the non-slit portion at the inner side of the slit opening is extended, so that the magnetic flux passing through this non-slit portion becomes greater and the press-contact force is increased.

Further, it is possible that the slits inclined opposite the above-described direction are provided on the rotor side, either together with the slits inclined in the above-described direction or separately from the above-described slits. Namely, it is possible that the rotor has a slit changing in slit width and inclined so as to be located at a smaller diameter position as viewed along an axial direction from the anti-frictional face side toward the frictional face side, and that an opening of the slit at the rotor frictional face side has a diameter portion smaller than an inner diameter of an annular space of the rotor which forms a coil insertion portion. In this structure, because the slit opening at the rotor frictional face side is located on relatively inner side in the radial direction, the area of the non-slit portion at the outer side of the slit opening is extended, so that the magnetic flux passing this non-slit portion becomes greater and the press-contact force is increased.

The electromagnetic clutch according to the present invention is preferably provided in a rotational drive force input section of a compressor, for example. Above all, it is suitable in a case where the compressor is used for an air conditioning system for vehicles. In such a compressor, the compressor driving torque fluctuates depending on heat load frequently, and accordingly, the torque transmitted from the drive source for driving the compressor fluctuates. And as described above, the increased passing magnetic flux makes it possible to endure sufficiently against a local maximum transmission torque and to prevent from an unnecessary sliding of the torque transmission section, so as to give a sufficient durability to the torque transmission section.

### Effect according to the Invention

In the electromagnetic clutch according to the present invention, by a simple modification where conventional straight slits are formed in such a taper shape that a slit width at the frictional face side of each of the slits is smaller than that at the anti-frictional face side, the mutual press-contact force of the frictional faces is enhanced without great cost increase, so that a higher torque transmission is possible with the same size as that of the conventional structure. In addition, if the required transmission torque is the same, the electric power for the electromagnetic coil can be saved and a whole electromagnetic clutch can be reduced in size and weight.

### Brief explanation of the drawings

[Fig. 1] Fig. 1 is a longitudinal section view of a conventional electromagnetic clutch.
[Fig. 2] Fig. 2 is an elevational view of the electromagnetic clutch in Fig. 1.
[Fig. 3] Fig. 3 is a plan view of a rotor of the electromagnetic clutch in Fig. 1.
[Fig. 4] Fig. 4 is a plan view of an armature of the electromagnetic clutch in Fig. 1.
[Fig. 5] Fig. 5 is a partial longitudinal section view of a conventional electromagnetic clutch for comparison.
[Fig. 6] Fig. 6 is a partial longitudinal section view of the electromagnetic clutch in Fig. 5.
[Fig. 7] Fig. 7 is a partial longitudinal section view of an embodiment of an electromagnetic clutch according to the present invention.
[Fig. 8] Fig. 8 is a partial longitudinal section view of another embodiment of an electromagnetic clutch according to the present invention.
[Fig. 9] Fig. 9 is a partial longitudinal section view of yet another electromagnetic clutch according to the present invention.
[Fig. 10] Fig. 10 is a partial longitudinal section view of a conventional electromagnetic clutch for comparison.
[Fig. 11] Fig. 11 is a partial longitudinal section view of the electromagnetic clutch in Fig. 7.
[Fig. 12] Fig. 12 is a relationship diagram between slit width and magnetic flux in a conventional electromagnetic clutch.
[Fig. 13] Fig. 13 is a schematic framework showing an example of slit shape in the present invention.
[Fig. 14] Fig. 14 is a relationship diagram between slit width and magnetic flux, comparing straight slit and taper slit.
[Fig. 15] Fig. 15 is a schematic framework showing an example of processing a taper slit.

### Explanation of symbols

- 11, 21, 31, 41:: rotor
- 11a, 21 a, 31a, 41 a:: frictional face of rotor
- 12, 22, 32:: armature
- 12a, 22a, 32a:: frictional face of armature
- 13:: annular space section
- 14:: coil
- 15, 16, 17, 25, 26, 27, 35, 36, 37, 42, 54:: slit
- 15a, 16a:: slit opening at rotor frictional face side
- 18:: magnetic flux
- 51:: object of slit processing
- 52:: irradiation head
- 53:: laser, electron beam, plasma or water jet
- 200, 300, 400:: electromagnetic clutch

### The Best mode for carrying out the Invention

Hereinafter, desirable embodiments of the present invention will be explained as comparing with conventional structures, by referring to figures.

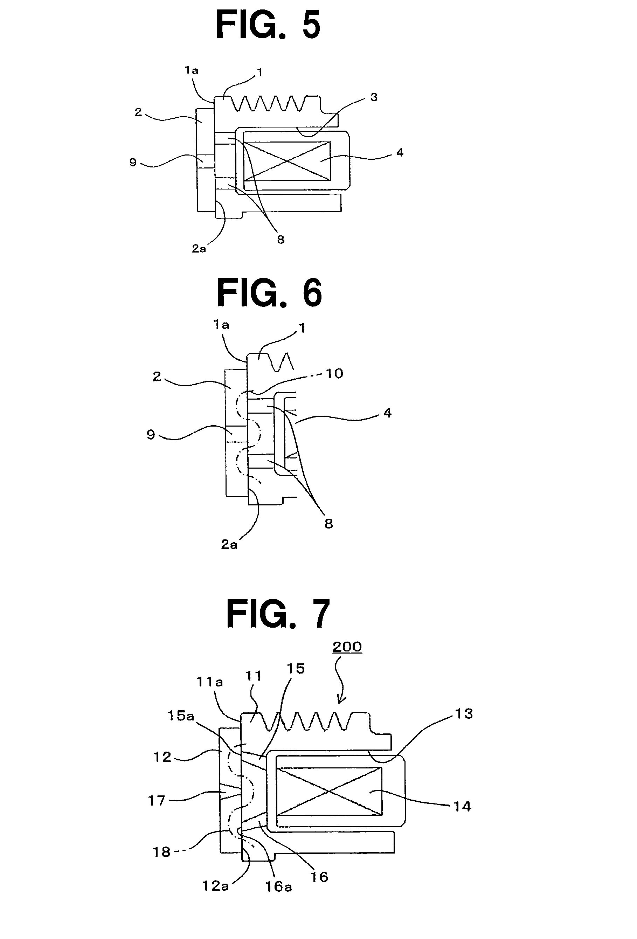

Fig. 5 schematically shows a partial longitudinal section of the above-described conventional electromagnetic clutch, and Fig. 6 schematically shows a further partial longitudinal section thereof. As shown in Fig. 6, for magnetic flux 10 by excitation of coil 4, magnetic flux is passed through from a non-slit portion of rotor 1 to either upper or lower non-slit portion of armature 2, and is passed through from the non-slit portion of armature 2 to a central non-slit portion of rotor 1, and is further passed through from the central non-slit portion of rotor 1 to the other non-slit portion of armature 2, and is passed through from the non-slit portion of armature 2 to the other non-slit portion of rotor 1, so that frictional faces 1a and 2a are brought into press contact with each other. As described above, because frictional faces 1a and 2a cannot have so large, there has been a limit of torque to be transmitted.

Fig. 7 schematically shows a partial longitudinal section of electromagnetic clutch 200 according to an embodiment of the present invention. Electromagnetic clutch 200 comprises rotor 11 and armature 12. And frictional face 11a of rotor 11 and frictional face 12a of armature 12, which are placed face to face, are axially brought into press contact with and separated from each other, by excitation and demagnetization of coil 14 inserted into annular space section 13 at the anti-armature side of rotor. In each of rotor 11 and armature 12, a plurality of slits 15,16 and 17, which penetrate in an axial direction and arcuately extend in a circumferential direction, for shielding the magnetic flux, are disposed as shown in Fig. 3 and Fig. 4. In this embodiment, all of slits 15,16, and 17 are formed to change in such a taper shape that the slit width of the frictional face side is smaller than that of the anti-frictional face side.

Further, in this embodiment slits 15,16 provided on the side of rotor 11 is formed as inclined with respect to the axial direction. Of these, slit 15 is a slit changing in slit width and inclined so as to be located, on an outer side in a radial direction, at a larger diameter position as viewed along the axial direction from the anti-frictional face side toward the frictional face 11a side, and opening 15a of slit 15 at rotor frictional face 11a side has a diameter portion larger than an outer diameter of annular space section 13 of rotor 11 which forms a coil insertion portion. Further, slit 16 is a slit changing in slit width and inclined so as to be located, on an inner side in a radial direction, at a smaller diameter position as viewed along the axial direction from the anti-frictional face side toward the frictional face 11a side, and opening 15a of slit 15 at rotor frictional face 11a side has a diameter portion smaller than an inner diameter of annular space section 13 of rotor 11 which forms a coil insertion portion. Furthermore, slit 17 provided on armature 12 side is formed as a slit which changes in slit width and extends in an axial direction.

In such structures where slits 15,16 and 17 changing in slit widths are provided, the area of the non-slit portion in frictional face 12a of armature 12 is extended by the width change structure of slit 17. The areas of the non-slit portions in frictional faces 11a of rotor 11, and specifically, those of a non-slit portion located on the inner side of opening 15a of slit 15 and a non-slit portion located on the outer side of opening 16a of slit 16, are extended by employing the width change structure and inclination structure of slits 15 and 16. As a result, magnetic flux 18 passing through these non-slit portions increases, so that the press-contact force between the frictional faces is increased by just that much. The increase of this press-contact force can be achieved by setting the average slit width of slits 15,16,17 changing in width to the same level as a width of a conventional straight slit, as described later, without damage to the magnetic flux shielding function of the slit, namely without leakage increase of magnetic flux through the slit.

Thus in this embodiment, the press-contact force between the frictional faces can be enhanced and more torque transmission can be performed even with the same clutch size and sliding between the frictional faces can be prevented even if the transmission torque fluctuates, so that the durability of the torque transmission section can be also improved. In addition, with the same required transmission torque, less electric current or voltage is enough to apply to coil 14 of electromagnetic clutch 200, and a whole electromagnetic clutch 200 can be reduced in size and weight.

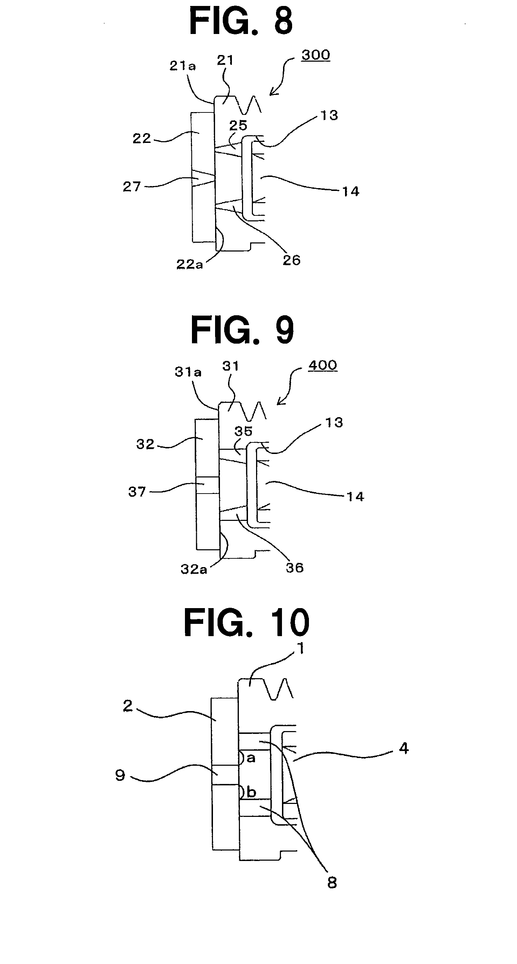

As the slit structure in the present invention as described above, many kinds of variations are available. Some will be exemplified below, however the present invention is not limited to them.
In electromagnetic clutch 300 depicted in Fig. 8, slits 25 and 26 provided in rotor 21 are formed in such a shape that the width becomes narrower toward frictional face 21 a side, being not inclined but extending axially. Slit 27 provided on armature 22 side is formed as a slit changing in slit width, and extends axially. Even in such a structure, the area of the non-slit portion in frictional surfaces 21 a and 22a is extended and the magnetic flux passing through the non-slit portion increases, and the press-contact force between the frictional faces is increased by just that much.

In electromagnetic clutch 400 depicted in Fig. 9, slits 35 and 36 provided in rotor 31 are formed in such a shape that the width becomes narrower toward frictional face 31a side and inclined with respect to the axial direction, while slit 37 provided on armature 32 side is formed in such a shape extending straightly in the axial direction without the slit width change. In such a structure, though the area of the non-slit portion in frictional face 32a does not extend, the area of mating surface of frictional faces 31a and 32a, which means the area of the surface for passing the magnetic flux, is surely extended, so that the passing magnetic flux increases and the press-contact force between the frictional faces is increased by just that much.

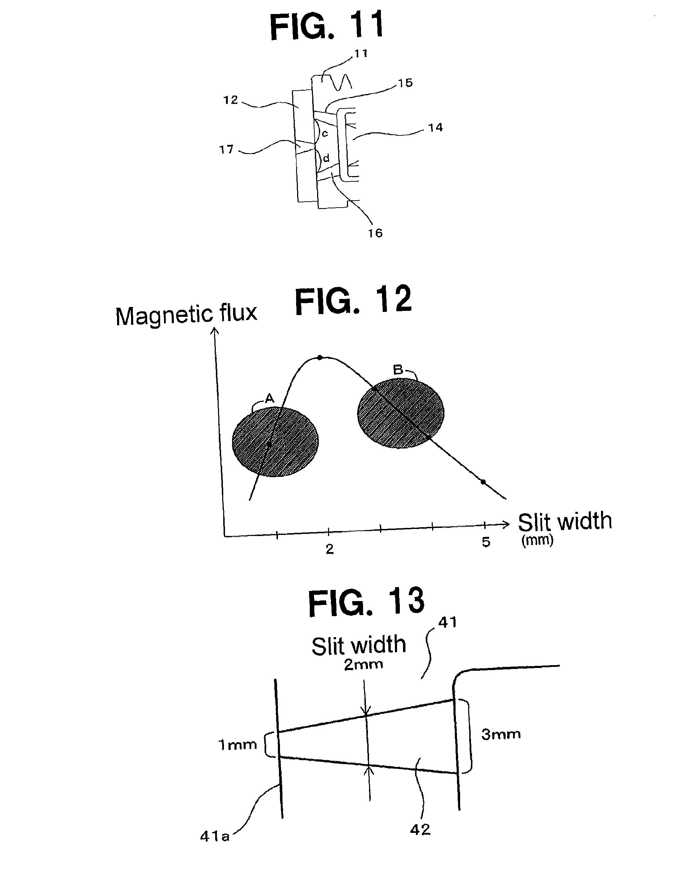

The effect of the slit structure of the present invention will be explained more clearly as comparing Fig. 10 showing a conventional structure and Fig. 11 showing a structure according to an embodiment of the present invention in Fig. 7. Even if the electromagnetic clutch has the same size in an outer shape, in a case with slits 8 and 9 which extend just straightly without width change, the magnetic flux passing surface, which is formed as a mating surface between the non-slit portions, has only an area size corresponding to the sizes of a,b in Fig. 10. On the other hand, in a case with slits 15, 16 and 17 which change their width and are inclined, the magnetic flux passing surface is extended to an area size corresponding to the sizes of c,d in Fig. 11.

Hereinafter, the performance of the electromagnetic clutch will be considered as to the slit width change in the taper shape. For example, if the plate thickness of the rotor of the electromagnetic clutch is assumed 5mm generally, when the width of a conventional straight slit is changed, the magnetic flux changes as depicted in Fig. 12, and expresses a local maximum value at 2mm as the slit width. In region A of Fig. 12, because the slit width becomes small, magnetic flux leak via the slit increases, and the magnetic flux decreases as a result. In region B, the sizes a,b in the frictional face depicted in Fig. 10 decreases, and the magnetic flux becomes hard to pass therethrough, so that the magnetic flux decreases. As a result, the passing magnetic flux through the non-slit portion is generally supposed to achieve local maximum at 2mm slit width when the rotor plate thickness is 5mm. In addition, change of the passing magnetic flux of the non-slit portion can be determined by simply measuring the transmission torque in a condition where the radius for torque calculation and the coefficient of friction between the frictional faces are constant, because the transmission torque can be understood as a value in proportion to the product which is calculated by multiplying the passing magnetic flux of the non-slit portion, the radius for torque calculation, and the coefficient of friction between the frictional faces.

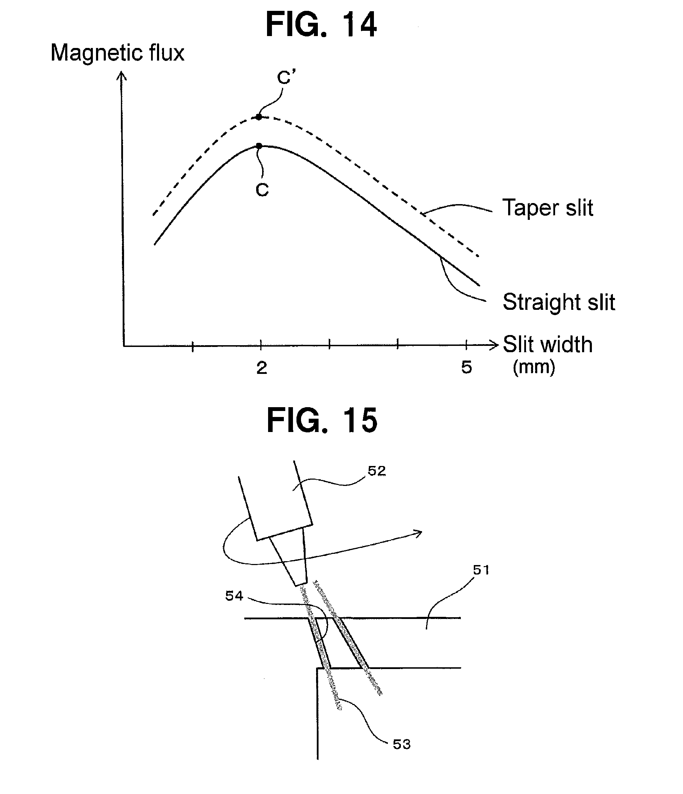

On the other hand, if the plate thickness of the rotor is 5mm, characteristics can be obtained by moving the above-described characteristics of straight slit in Fig. 14 in parallel, as maintaining the slit width (average slit width) constant between points C,C' which exhibit the local maximum magnetic flux, in such a case as shown in Fig. 13, where the average slit width is set to 2mm and slit 42 of rotor 41 is formed in such a taper shape that the slit width in the opening section at frictional face 41a side of rotor 41 is set to 1mm and the slit width at the anti-frictional face side is set to 3mm. In other words, even with the taper slit, despite of the magnetic flux change according to the average slit width change, the magnetic flux itself increases and the transmission torque increases by that much. As a result, if the electromagnetic clutch has the same size in an outer shape, the transmission torque can be increased by employing a taper slit, and if the required transmission torque is the same, electric power for the coil can be saved and the whole electromagnetic clutch can be reduced in size and weight.

The taper slit of the present invention can be formed by the process using any one of laser, electron beam, plasma, and water jet. By the process as shown in Fig. 15, object of slit processing 51 is irradiated with laser, electron beam, plasma, or water jet 53, from irradiation head 52 as irradiation means of laser, electron beam, plasma, or water jet, and irradiation head 52 is moved in three dimensional directions so that laser, electron beam, plasma, or water jet 53 is irradiated along the outer peripheral line or the inner peripheral line of the shape of arc-shaped slit 54, or alternatively, laser, etc. is irradiated along the outer peripheral line or the inner peripheral line of the shape of arc-shaped slit 54 by changing the position of irradiation head 52 as changing the irradiation angle through the rotation of irradiation head 52, and therefore, slit 54 in a target shape is formed. For example, the three-dimensional movement can be performed easily by using a head having the three-dimensional robot. By such a process, a slit whose width changes in a taper shape can be surely processed with high accuracy, and the slit can be surely formed in a desirable shape even when inclined with respect to the electromagnetic clutch axial direction. Because it is a cut process with laser, electron beam, plasma or water jet 53, the burr as generated in a punch press process is not generated, so that post-process to burr is not necessary and there is no limitation such as a direction of punching press. Further, because a tool such as a punch is not necessary, there is no tool size limitation derived from the tool durability, etc. and a slit in an every shape can be formed flexibly with high accuracy.

### Industrial Applications of the Invention

The electromagnetic clutch according to the present invention is applicable to an electromagnetic clutch used for all uses, and is suitable as an electromagnetic clutch provided in a drive force input section of a compressor, and especially in a drive force input section of a compressor in an air conditioning system for vehicles.

## Claims

1. An electromagnetic clutch, in which a plurality of magnetic flux shielding slits penetrating in an axial direction and extending arcuately in a circumferential direction are formed individually in a rotor and an armature whose frictional faces are disposed face to face in said axial direction at a condition capable of being brought into contact with and separated from each other, and a magnetic flux generated by excitation of a coil inserted on an anti-armature side of said rotor is passed from a non-slit portion of said rotor to a non-slit portion of said armature and from said non-slit portion of said armature to another non-slit portion of said rotor, so that a magnetic attraction force is generated to bring both frictional faces into press contact with each other and so that said both frictional faces are separated by demagnetization of said coil, **characterized in that** said slits of at least one of said rotor and said armature are formed in such a taper shape that a slit width at a frictional face side of each of said slits is smaller than that at an anti-frictional face side.

2. The electromagnetic clutch according to claim 1, wherein said slits changing in slit width are formed by using any one of a laser, an electron beam, a plasma and a water jet.

3. The electromagnetic clutch according to claim 1, wherein at least one of said slits changing in slit width is inclined relative to said axial direction.

4. The electromagnetic clutch according to claim 1, wherein said rotor has a slit changing in slit width and inclined so as to be located at a larger diameter position as viewed along an axial direction from said anti-frictional face side toward said frictional face side, and an opening of said slit at said rotor frictional face side has a portion larger in diameter than an outer diameter of an annular space of said rotor which forms a coil insertion portion.

5. The electromagnetic clutch according to claim 1, wherein said rotor has a slit changing in slit width and inclined so as to be located at a smaller diameter position as viewed along an axial direction from said anti-frictional face side toward said frictional face side, and an opening of said slit at said rotor frictional face side has a portion smaller in diameter than an inner diameter of an annular space of said rotor which forms a coil insertion portion.

6. The electromagnetic clutch according to claim 1, wherein said clutch is provided in a rotational drive force input section of a compressor.

7. The electromagnetic clutch according to claim 6, wherein said compressor is used for an air conditioning system for vehicles.
